# EUROPEAN PATENT APPLICATION

(11) **EP 4 554 170 A1**
(43) Date of publication of application: **14.05.2025**
(21) Application number: 23858926.1
(22) Date of filing: 04.07.2023
(51) Int. Cl.: H04L 41/142

(54) **PROCESSING APPARATUS AND CONTROL METHOD**

(30) Priority: 31.08.2022 CN 202211060064
(71) Applicant: Huawei Technologies Co., Ltd., Shenzhen, Guangdong 518129 (CN)
(72) Inventor: LIANG, Jing, Shenzhen, Guangdong 518129 (CN); YANG, Guoxin, Shenzhen, Guangdong 518129 (CN); LIANG, Fei, Shenzhen, Guangdong 518129 (CN); ZENG, Xing, Shenzhen, Guangdong 518129 (CN); JING, Tao, Shenzhen, Guangdong 518129 (CN)
(74) Representative: MERH-IP Matias Erny Reichl Hoffmann Patentanwälte PartG mbB
(86) International application number: PCT/CN2023/105636
(87) International publication number: WO 2024/045888

(57) **Abstract**

A processing apparatus and a control method are provided, to implement efficient computation of a communication algorithm and an artificial intelligence algorithm in one processing apparatus. The processing apparatus may support an operation of the communication algorithm and an operation of the artificial intelligence algorithm, and specifically includes a computing unit and a control unit. The computing unit includes a computing element, and the computing element supports a first connection relationship and a second connection relationship between at least one adder and at least one multiplier. The first connection relationship is used to implement a real-number-stream-based communication algorithm or artificial intelligence algorithm, and the second connection relationship is used to implement a complex-number-stream-based communication algorithm or artificial intelligence algorithm. The control unit is configured to control a connection relationship used by the computing element, and the connection relationship includes the first connection relationship and the second connection relationship. The foregoing processing apparatus may implement support for the communication algorithm and the artificial intelligence algorithm by using a single piece of hardware, and the two types of algorithms may share a hardware resource, to improve computing efficiency, area efficiency, energy efficiency, and the like of hardware of the processing apparatus.

## Description

### CROSS-REFERENCE TO RELATED APPLICATIONS

This application claims priority to Chinese Patent Application No. 202211060064.1, filed with the China National Intellectual Property Administration on August 31, 2022 and entitled "PROCESSING APPARATUS AND CONTROL METHOD", which is incorporated herein by reference in its entirety.

### TECHNICAL FIELD

Embodiments of this application relate to the field of communication technologies, and in particular, to a processing apparatus and a control method.

### BACKGROUND

Algorithms such as artificial intelligence (artificial intelligence, AI)/machine learning (machine learning, ML) are widely used in various fields such as image processing, natural language processing, and autonomous driving. Currently, most AI algorithms are real-number-stream-based neural network designs. Deep learning frameworks that are widely used in the industry construct basic operators of algorithms based on real-number models. Correspondingly, internal operation manners, and data storage, data organization, and data migration manners of hardware computing platforms, processing apparatuses, and the like of the AI algorithms are also designed based on real-number models.

However, communication algorithms are mainly constructed based on mathematical models of complex numbers. Correspondingly, internal operation manners, and data storage, data organization, and data migration manners of hardware computing platforms, processing apparatuses, and the like of the communication algorithms are also designed based on complex-number models.

Therefore, processing procedures of the communication algorithms are greatly different from those of the AI algorithms, and basic operations of the communication algorithms and the AI algorithms are respectively centered on complex numbers and real numbers. Currently, processing apparatus designs of the two types of algorithms are separately optimized. How to effectively implement efficient computation of the communication algorithms and the AI algorithms in one processing apparatus, to improve computing efficiency, area efficiency, and energy efficiency of the processing apparatus becomes an urgent problem to be resolved.

### SUMMARY

Embodiments of this application provide a processing apparatus and a control method, to effectively implement efficient computation of a communication algorithm and an AI algorithm in one processing apparatus.

According to a first aspect, a processing apparatus is provided. The processing apparatus may be used in a network device, a terminal device, or another electronic device. The processing apparatus may support an operation of a communication algorithm and an operation of an AI algorithm. The processing apparatus includes a computing unit and a control unit. The computing unit includes a computing element. The computing element supports a first connection relationship between at least one adder and at least one multiplier, and a second connection relationship between the at least one adder and the at least one multiplier. The first connection relationship is used to implement a real-number-stream-based communication algorithm or AI algorithm, and the second connection relationship is used to implement a complex-number-stream-based communication algorithm or AI algorithm. The control unit is configured to control a connection relationship used by the computing element in the computing unit, and the connection relationship includes the first connection relationship and the second connection relationship.

According to this embodiment of this application, the processing apparatus may support a plurality of types of operators, for example, a conventional complex-number operator (such as, a complex-number operator in a communication algorithm), a conventional real-number operator (such as, a real-number operator in a communication algorithm), an AI complex-number operator (such as, a complex-number operator in a communication AI algorithm), an AI real-number operator (such as, a real-number operator in a non-communication AI algorithm or a real-number operator in a communication AI algorithm), and the like, and may implement efficient support for a communication algorithm and an AI algorithm by using a single piece of hardware, and the two types of algorithms may share a hardware resource, to improve computing efficiency, area efficiency, and energy efficiency of hardware of the processing apparatus. In addition, in this embodiment of this application, when a data stream is processed, an operation to be performed is determined once for a plurality of pieces of data that form the data stream. Compared with a case in which an operation to be performed is determined once for each piece of data, this application can improve computing efficiency.

In a possible design, the at least one adder and the at least one multiplier in the computing element are fully connected. In this manner, the computing element can support a plurality of connection relationships, so that the computing element can support the first connection relationship and the second connection relationship. In this way, the computing element can implement a real-number-stream-based operation and a complex-number-stream-based operation in different connection manners.

In a possible design, the control unit may schedule the computing unit in a time division multiplexing manner to implement the communication algorithm and the AI algorithm. In this manner, computing efficiency, area efficiency, energy efficiency, and the like of the hardware of the processing apparatus can be improved.

In a possible design, the computing unit includes one slot, and the slot includes one or more computing elements.

In a possible design, the computing unit includes at least two slots, the at least two slots are connected to each other, and each slot includes one or more computing elements. In the foregoing manner, the slots are interconnected, so that the slots are reusable. This can improve resource utilization.

In a possible design, when implementing a function corresponding to the slot, the slot performs a corresponding operation based on a scheduled computing element in the slot.

The scheduled computing element in the slot may be related to an operation amount. For example, if an operation amount of an operation task is large, the control unit may schedule a large quantity of computing elements in the slot to perform an operation. If an operation amount of an operation task is small, the control unit may schedule a small quantity of computing elements in the slot to perform an operation. In the foregoing design, the computing element in the slot may be scheduled based on an operation amount, so that resource utilization can be improved.

In a possible design, the control unit is further configured to schedule all or some of the at least two slots to perform an operation. In the foregoing design, operation efficiency and resource utilization can be improved.

In a possible design, the AI algorithm includes a communication AI algorithm and/or a non-communication AI algorithm.

According to a second aspect, a control method is provided. The method may be executed by a control unit in a processing apparatus, and the method may be implemented through the following steps: The control unit determines an operation task; and if the operation task is a real-number-stream-based operation, the control unit schedules a first connection relationship between at least one adder and at least one multiplier of a computing element in a computing unit to perform an operation; or if the operation task is a complex-number-stream-based operation, the control unit schedules a second connection relationship between the at least one adder and the at least one multiplier of the computing element to perform an operation. The first connection relationship is used to implement a real-number-stream-based communication algorithm or AI algorithm, and the second connection relationship is used to implement a complex-number-stream-based communication algorithm or AI algorithm.

According to this embodiment of this application, the control unit may schedule an operator of the computing unit based on the operation task, so that utilization and energy efficiency of hardware of the processing apparatus can be improved.

In a possible design, the method further includes: The control unit schedules at least one slot in the computing unit based on the operation task, and the at least one scheduled slot is configured to perform an operation on the operation task. In the foregoing design, operation efficiency and resource utilization can be improved.

In a possible design, the method further includes: The control unit may schedule a computing element in a first slot based on the operation task when scheduling the first slot in the computing unit, and the scheduled computing element is configured to perform the operation on the operation task.

The scheduled computing element in the slot may be related to an operation amount. For example, if an operation amount of the operation task is large, the control unit may schedule a large quantity of computing elements in the slot to perform an operation. If an operation amount of the operation task is small, the control unit may schedule a small quantity of computing elements in the slot to perform an operation. In the foregoing design, the computing element in the slot may be scheduled based on an operation amount, so that resource utilization can be improved.

According to a third aspect, a control unit is provided, and the control unit includes a determining module and a scheduling module. The determining module is configured to determine an operation task. The scheduling module is configured to, when the operation task is a real-number-stream-based operation, schedule a first connection relationship between at least one adder and at least one multiplier of a computing element in a computing unit to perform an operation; or when the operation task is a complex-number-stream-based operation, schedule a second connection relationship between the at least one adder and the at least one multiplier of the computing element to perform an operation. The first connection relationship is used to implement a real-number-stream-based communication algorithm or AI algorithm, and the second connection relationship is used to implement a complex-number-stream-based communication algorithm or AI algorithm.

In a possible design, the scheduling module is further configured to schedule at least one slot in the computing unit based on the operation task, and the at least one scheduled slot is configured to perform an operation on the operation task.

In a possible design, the scheduling module may be further specifically configured to schedule a computing element in a first slot based on the operation task when scheduling the first slot in the computing unit, and the scheduled computing element is configured to perform the operation on the operation task.

According to a fourth aspect, a computer-readable storage medium is provided. The computer-readable storage medium stores a computer program or instructions. When the computer program or the instructions are executed by a processing apparatus, the method in the second aspect or any one of the possible designs is implemented.

According to a fifth aspect, a computer program product storing instructions is provided. When the instructions are run by a processing apparatus, the method in the second aspect or any one of the possible designs is implemented.

According to a sixth aspect, a chip system is provided. The chip system includes the processing apparatus in the first aspect or any one of the possible designs, and may further include a memory. The chip system may include a chip, or may include a chip and another discrete component.

For technical effect that can be achieved by a technical solution in any one of the third aspect to the sixth aspect, refer to the descriptions of the technical effect that can be achieved by the technical solution in the first aspect or the second aspect. No repeated description is provided.

### BRIEF DESCRIPTION OF DRAWINGS

FIG. 1 is a diagram of a communication algorithm processing apparatus and an AI algorithm processing apparatus according to an embodiment of this application;
FIG. 2A is a diagram of a communication AI algorithm according to an embodiment of this application;
FIG. 2B is a diagram of another communication AI algorithm according to an embodiment of this application;
FIG. 2C is a diagram of another communication AI algorithm according to an embodiment of this application;
FIG. 3 is a diagram of a structure of a processing apparatus according to an embodiment of this application;
FIG. 4 is a diagram of a structure of a processing apparatus according to an embodiment of this application;
FIG. 5 is a diagram of a structure of a computing element according to an embodiment of this application;
FIG. 6A is a diagram in which a communication algorithm and an AI algorithm are scheduled according to an embodiment of this application;
FIG. 6B is a diagram of a slot connection relationship according to an embodiment of this application;
FIG. 7 is a diagram of a structure of a computing unit according to an embodiment of this application; and
FIG. 8 is a diagram of a structure of a control unit according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Embodiments of this application may be applied to the communication field. The communication field may include but is not limited to a 5G communication system, a future communication system (such as a 6G communication system), a satellite communication system, an underwater communication system, a device-to-device (device-to-device, D2D) communication system, a machine-to-machine (machine-to-machine, M2M) communication system, an internet of things (internet of things, IoT), an uncrewed aerial vehicle communication system, a narrowband internet of things (narrowband-internet of things, NB-IoT) system, a long term evolution (long term evolution, LTE) system, and three major application scenarios of 5G mobile communication systems, namely, enhanced mobile broadband (enhanced mobile broadband, eMBB), ultra-reliable low latency communication (ultra-reliable low latency communication, URLLC), and massive machine-type communication (massive machine-type communication, mMTC).

Embodiments of this application may be further applied to another field, for example, a field in which an AI technology is applied, such as the field of image processing, the field of voice processing, the field of deep learning, the field of machine learning, the field of natural language processing, or the field of big data processing.

For example, if the processing apparatus is used in the communication field, the processing apparatus may be specifically used in a network device, or may be used in a terminal device. The network device may be a device having a wireless transceiver function or a chip that can be disposed in the network device. The network device includes but is not limited to a base station (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a satellite, an uncrewed aerial vehicle, a transmission point (transmission point, TP), a transmission and reception point (transmission and reception point, TRP), or the like. Alternatively, the network device may be a network node that constitutes a gNB or a transmission point, for example, a baseband unit (BBU), or a distributed unit (distributed unit, DU).

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), an uncrewed aerial vehicle, a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like. Alternatively, the terminal device may be a chip, a chip module (or a chip system), or the like that can be disposed in the foregoing devices.

For ease of understanding by a person skilled in the art, the following explains and describes some terms in embodiments of this application.
(1) Real-number stream: Hardware receives a continuous string of real-number data based on a configuration (for example, an instruction configuration), and performs same computation processing on the continuous string of real-number data based on the same instruction configuration. After processing of a data amount specified by a corresponding instruction is completed, processing of an instruction (or an operator) is considered to be completed.
(2) Complex-number stream: Hardware receives a continuous string of complex-number data based on a configuration (for example, an instruction configuration), and performs same computation processing on the continuous string of complex-number data based on the same instruction configuration. After a data amount specified by a corresponding instruction is completed, an instruction (or an operator) is considered to be completed.
(3) Slot: is a functional unit that includes a group of processing elements (processing elements, PEs).
(4) Operator: can be understood as a mapping in the mathematical field, and a function of an operator is to map a function to a function, or map a function to an element in vector space. In the computer field, an operator can be understood as a function operation that completes a specific mathematical operation. An input and an output usually exist when an operator is used, and the operator completes a corresponding function operation or data conversion from the input to the output.
(5) AI algorithm: An artificial intelligence algorithm is an algorithm that enables a computer or computer-controlled software and hardware to perform intelligent learning, decision-making, and problem solving. A manner of the artificial intelligence algorithm is similar to that of intelligent cognition and thinking of human beings. There are a plurality of different types of AI algorithms, for example, a machine learning (machine learning, ML) algorithm, a deep learning algorithm, and a Bayesian statistics algorithm. AI algorithms can accurately perform abstraction modeling on complex high-dimensional problems, can dynamically and systematically perform accurate prediction, and can make optimal multi-objective decisions that resolve complex problems quickly and effectively. Currently, AI algorithms are applied to a plurality of fields, such as image recognition, voice processing, natural language processing, recommendation systems, medical diagnosis, financial analysis, wireless communication networks, wired communication networks, and intelligent manufacturing. In a wireless communication system, a wireless AI algorithm can significantly improve performance of the communication system, and reduce transmission overheads and operation and maintenance costs of the communication system.

In embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, and a, b, and c may be singular or plural.

In addition, unless otherwise stated, ordinal numbers such as "first" and "second" in embodiments of this application are intended to distinguish between a plurality of obj ects, and are not intended to limit sizes, content, an order, a time sequence, priorities, or importance degrees of the plurality of objects. For example, a first connection relationship and a second connection relationship are merely used to distinguish between different connection relationships, but do not indicate different complexity, priorities, importance, or the like of the two connection relationships.

The foregoing describes some terms in embodiments of this application. The following describes technical features in embodiments of this application.

Conventional AI algorithms (for example, AI/ML algorithms applied to fields such as image recognition, voice processing, natural language processing, and recommendation systems) mainly construct basic operators of the algorithms based on real-number models. Correspondingly, internal operation manners, and data storage, data organization, and data migration manners of hardware computing platforms, processing apparatuses, and the like of the conventional AI algorithms are also designed based on real-number models. Conventional algorithms in the communication field (referred to as conventional communication algorithms below, for example, communication algorithms of a 5G NR wireless communication system, a satellite communication system, a Wi-Fi communication system, and the like) mainly construct basic operators of the algorithms based on complex-number models. Correspondingly, internal operation manners, and data storage, data organization, and data migration manners of hardware computing platforms, processing apparatuses, and the like of the conventional communication field are also designed based on complex-number models.

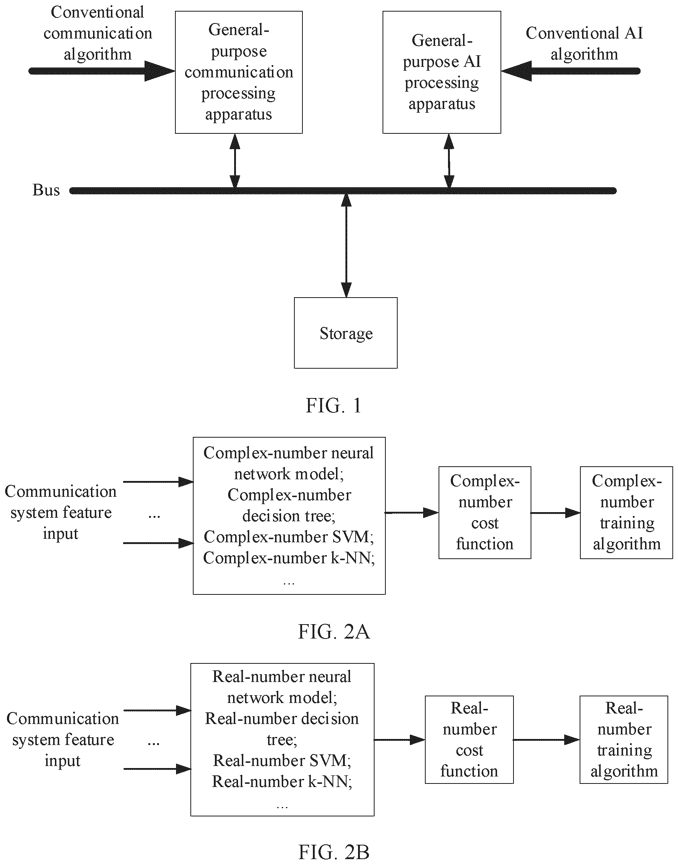

Because a mathematical model of a conventional communication algorithm is greatly different from that of a conventional AI algorithm, currently, the conventional communication algorithm is usually implemented by using a general-purpose communication processing apparatus, and the conventional AI algorithm is usually implemented by using a general-purpose AI processing apparatus, as shown in FIG. 1. The two types of processing apparatuses each include a control unit and a computing unit. The control units of the two types of processing apparatuses are configured to schedule and control corresponding operators. The computing unit of the general-purpose communication processing apparatus mainly constructs a complex-number operator, and uses a corresponding operator to complete a function of the conventional communication algorithm. The computing unit of the general-purpose AI processing apparatus mainly constructs a real-number operator, and uses a corresponding operator to complete a function of the conventional AI algorithm. The foregoing existing design method limits application objects and scenarios of the two types of processing apparatuses. If a plurality of sets of processing apparatuses of different types are configured, it is unfavorable to obtaining better implementation costs, energy efficiency, area efficiency, computing efficiency, and the like.

Further, with intelligent development of communication systems, application of communication AI algorithms increases. For the communication AI algorithms, depending on a specific application object, there are both complex-number-model-based algorithms and real-number-model-based algorithms. If an existing processing apparatus design method is used, a plurality of sets of processing apparatuses of different types need to be configured, which is unfavorable to implementation costs, area efficiency, energy efficiency, processing efficiency, and the like.

In view of this, embodiments of this application provide a processing apparatus and a control method. The processing apparatus supports an efficient operation of a communication algorithm and an efficient operation of an AI algorithm. According to the processing apparatus provided in this application, the communication algorithm and the AI algorithm can be efficiently run on one processing apparatus, to obtain optimal implementation costs, area efficiency, energy efficiency, computing efficiency, and the like. For example, the AI algorithm may include a communication AI algorithm and/or a non-communication AI algorithm. For example, the communication algorithm described below may be understood as the conventional communication algorithm described above. In an example, the communication algorithm described below may be a communication non-AI algorithm.

It should be noted that, in this embodiment of this application, the communication algorithm may include a real-number-based communication algorithm, or may include a complex-number-based communication algorithm. The communication AI algorithm may include a real-number-based communication AI algorithm, or may include a complex-number-based communication AI algorithm. The non-communication AI algorithm may include a real-number-based non-communication AI algorithm, or may include a complex-number-based non-communication AI algorithm.

The communication AI algorithm may implement the complex-number-based communication AI algorithm by using, but is not limited to, one or more of the following structures: a complex-number neural network model (or a complex-number decision tree, or a complex-number support vector machine (support vector machine, SVM), or a complex-number k-nearest neighbor (k-nearest neighbor, k-NN), or the like), a complex-number cost function, and a complex-number training algorithm, as shown in FIG. 2A.

Alternatively, the communication AI algorithm may implement the real-number-based communication AI algorithm by using, but is not limited to, one or more of the following structures: a real-number neural network model (or a real-number SVM, or a real-number k-NN, or the like), a real-number cost function, and a real-number training algorithm, as shown in FIG. 2B.

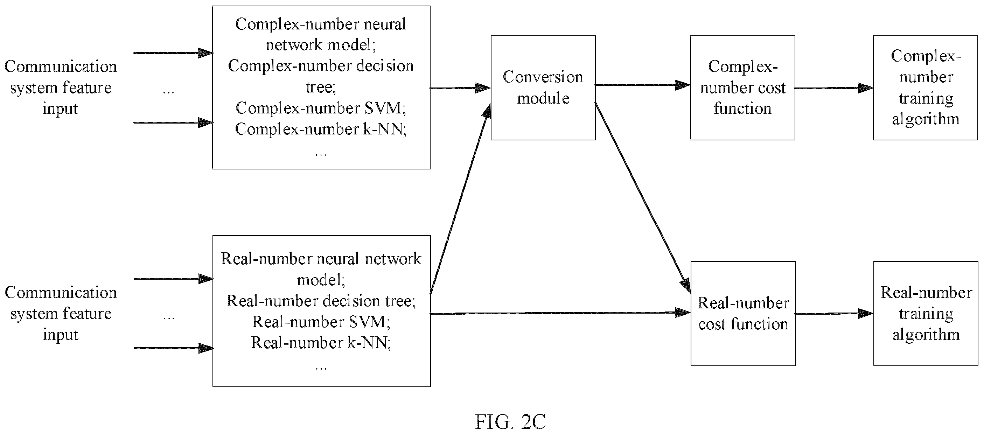

Alternatively, the communication AI algorithm may implement a complex-number-based communication AI algorithm and/or a real-number-based communication AI algorithm by using, but is not limited to, one or more of the following structures: The structure shown in FIG. 2A and the structure shown in FIG. 2B are connected by using a conversion module. The conversion module is configured to implement conversion from a real number to a complex number and conversion from a complex number to a real number, as shown in FIG. 2C.

For example, the complex-number neural network model may include but is not limited to one or more of the following: a complex-number-based multi-layer perception (multi-layer perception, MLP) model, a complex-number-based convolutional neural network (convolutional neural network, CNN) model, a complex-number-based residual network (ResNet) model, a complex-number-based recurrent neural network (recurrent neural network, RNN) model, a complex-number-based transformer (Transformer) model, a complex-number-based autoencoder (Autoencoder) model, a complex-number-based generative adversarial network (generative adversarial network, GAN) model, a complex-number-based activation function, a complex-number-based batch normalization (Batch Normalization) function model, a complex-number-based pooling function, and the like.

The complex-number cost function is used to define an optimization objective of the AI/ML algorithm. The complex-number cost function model may include but is not limited to one or more of the following: a minimum mean square error (minimum mean square error, MMSE), a minimum cosine similarity (cosine similarity, CS), a minimum squared generalized cosine similarity (squared generalized cosine similarity, SGCS), a maximum cross entropy (cross entropy, CE), and the like.

The complex-number training algorithm is used to train an AI/MLalgorithm model, so that an output of a cost function of the AI/ML algorithm model continuously converges to an optimal value. The complex-number training algorithm may include but is not limited to one or more of the following: a complex-number-based stochastic gradient descent (stochastic gradient descent, SGD) algorithm, a complex-number-based adaptive moment estimation (adaptive moment estimation, Adam) algorithm, and an extended algorithm of the Adam algorithm such as AdaMax or AMSGrad.

For example, the real-number neural network model may include but is not limited to one or more of the following: a real-number-based multi-layer perception (multi-layer perception, MLP) model, a real-number-based convolutional neural network (convolutional neural network, CNN) model, a real-number-based residual network (ResNet) model, a real-number-based recurrent neural network (recurrent neural network, RNN) model, a real-number-based transformer (Transformer) model, a real-number-based autoencoder (Autoencoder) model, a real-number-based generative adversarial network (generative adversarial network, GAN) model, a real-number-based activation function, a real-number-based batch normalization (Batch Normalization) function model, a real-number-based pooling function, and the like.

The real-number cost function is used to define an optimization objective of the AI/ML algorithm. The real-number cost function model may include but is not limited to one or more of the following: a minimum mean square error (minimum mean square error, MMSE), a minimum cosine similarity (cosine similarity, CS), a minimum squared generalized cosine similarity (squared generalized cosine similarity, SGCS), a maximum cross entropy (cross entropy, CE), and the like.

The real-number training algorithm is used to train an AI/MLalgorithm model, so that an output of a cost function of the AI/ML algorithm model continuously converges to an optimal value. The real-number training algorithm may include but is not limited to one or more of the following: a real-number-based stochastic gradient descent (stochastic gradient descent, SGD) algorithm, a real-number-based adaptive moment estimation (adaptive moment estimation, Adam) algorithm, and an extended algorithm of the Adam algorithm such as AdaMax or AMSGrad.

The communication AI algorithm may be applied to a plurality of applications of a communication system. For example, an access network and a core network that are applied to a 5G NR wireless network include a physical layer, a link layer, a network layer, and the like of the access network. Application of several AI algorithms at the physical layer and the link layer of the wireless network are used as an example.

A receiver at the physical layer receives an uplink DMRS channel, an uplink SRS channel, a downlink CSI-RS channel, or the like. Negative impact of channel noise and channel interference can be effectively reduced by using an AI channel estimation algorithm, so that accuracy of channel estimation is improved, to obtain an uplink or downlink transmission throughput gain.

The receiver at the physical layer uses an AI algorithm to perform channel time domain prediction on unknown channels at one or more future moments based on a plurality of historical channel estimation results, so that a capability of tracking a dynamic change of a wireless communication channel is improved, to obtain an accurate prediction of future channel information. In this way, it is ensured that transmission performance is not affected when a terminal user moves continuously, so that user experience is improved.

A transmitter at the physical layer uses an AI neural network algorithm to perform constellation symbol modulation, so that a regular constellation or an irregular constellation at a transmit end can be constructed. On the receiver side, the AI neural network algorithm is used to demodulate a transmitted constellation symbol to accurately recover sent bit information, so that transmission capacity of the system can be improved.

The transmitter at the physical layer uses the AI neural network algorithm to perform compression feedback on channel state information (channel state information, CSI) obtained through estimation, and the receiver uses the AI neural network algorithm to perform CSI recovery and channel reconstruction on received feedback bit information. CSI compression feedback and CSI recovery and reconstruction are performed by using an AI algorithm, so that a compression ratio of channel CSI information and CSI reconstruction precision can be effectively improved, to improve transmission capacity of the system.

The transmitter at the physical layer uses an AI algorithm to perform beamforming on a signal to be sent, to improve an interference suppression capability of multi-user sending. On the receiver side, an AI algorithm is used to perform accurate detection on a signal, so that a quantity of user multiplexed streams of a multiple-input multiple-output (multiple-input multiple-output, MIMO) system can be improved, to improve transmission capacity of the system.

The link layer uses an AI algorithm to perform link quality prediction based on measurement quantities such as a channel quality indicator (channel quality indicator, CQI) and reference signal received power (reference signal received power, RSRP) that are fed back by a terminal, to determine an optimal transmission manner MCS selection to send a corresponding signal. High-accuracy MCS selection can significantly improve link transmission quality and obtain higher transmission throughput. In addition, the communication AI algorithm may further perform highfrequency beam management, non-linear device compensation, and the like, and wireless air interface resource scheduling, and the like in a MIMO system. Details are not listed one by one herein.

The non-communication AI algorithm may include one or more of the following: an AI algorithm for image processing, an AI algorithm for voice processing, an AI algorithm for a recommendation system, an AI algorithm for medical diagnosis, an AI algorithm for natural language processing, an AI algorithm for financial analysis, and the like. Details are not listed one by one herein.

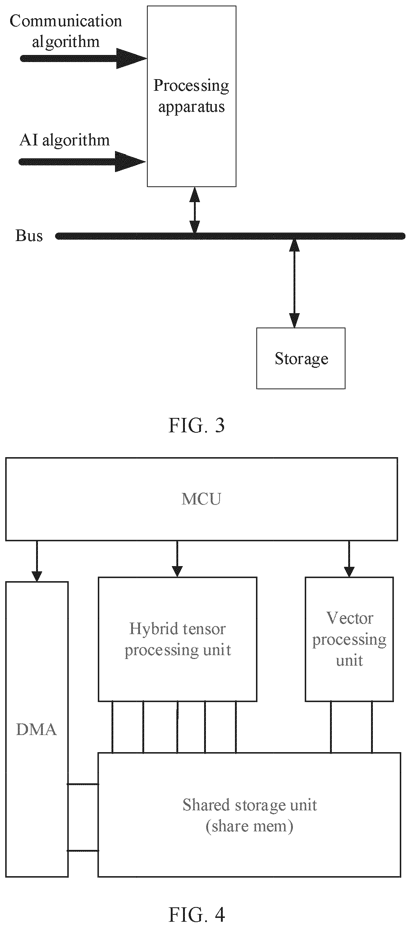

Refer to FIG. 3. An embodiment of this application provides a structure of a processing apparatus. The processing apparatus includes a computing unit and a control unit. The computing unit is configured to perform an operation of an algorithm. The control unit is configured to control the computing unit to perform an operation. Specifically, the control unit may control, in a software scheduling manner, the computing unit to perform a communication algorithm or an AI algorithm. For example, the control unit schedules the computing unit by sending an instruction to the computing unit. Specific functions of the computing unit and the control unit are described in detail below.

For example, the control unit may also be referred to as a micro-controller unit (micro-controller unit, MCU), and the computing unit may include a hybrid tensor processing unit (Hybrid Tensor Array) and a vector processing unit (Vector Unit).

The hybrid tensor processing unit may include but is not limited to matrix computation and tensor computation. For example, computation of the hybrid tensor processing unit includes: matrix multiplication, matrix addition, matrix decomposition (such as singular value decomposition (singular value decomposition, SVD) and Cholesky (Cholesky) decomposition), matrix inversion, matrix point multiplication, one-dimensional, two-dimensional, or high-dimensional (greater than two-dimensional) convolution, one-dimensional, two-dimensional, or high-dimensional (greater than two-dimensional) sparse convolution, tensor multiplication, tensor addition, tensor point multiplication, tensor data extraction, tensor data transposition, and tensor dimension conversion.

The vector processing unit may include but is not limited to vector computation and non-linear computation. For example, computation of the vector processing unit includes: vector multiplication, vector addition, vector point multiplication, vector transposition, vector reciprocal computation, vector square rooting, vector trigonometric function, vector exponential function, vector activation function, and the like. A type of the activation function may include but is not limited to a sigmoid function, a tanh function, a Relu function, an Elu function, a LeakyRelu function, a softmax function, a softplus function, a swish function, and the like.

Optionally, the processing apparatus further includes a storage unit. The storage unit is generally configured to temporarily buffer data required for computation of a current program. In this embodiment, the storage unit is used as a shared memory (shared memory), stores data required by the computing unit, and provides the data for the computing unit, namely, the hybrid tensor processing unit and the vector processing unit, for data reading and writing, as shown in FIG. 4.

Optionally, a direct memory access (direct memory access, DMA) unit is used as an accessing device between the processing apparatus and the outside, and is mainly configured to migrate external data to an internal shared memory, or migrate data for which computation is completed in the shared memory to external storage space.

The following first describes a structure of the computing unit.

The computing unit includes a plurality of PEs, and each PE includes at least one multiplier and at least one adder. A quantity of multipliers and/or a quantity of adders included in each PE may be the same or different. This is not specifically limited in this application.

The PE supports the adder and the multiplier to be connected by using at least two connection relationships, including a first connection relationship and a second connection relationship. The at least one adder and the at least one multiplier are connected by using the first connection relationship, to implement a real-number-stream-based algorithm. The at least one adder and the at least one multiplier are connected by using the second connection relationship, to implement a complex-number-stream-based algorithm. It should be noted that a multiplier connected in the first connection relationship and a multiplier connected in the second connection relationship may be the same or may be different. An adder connected in the first connection relationship and an adder connected in the second connection relationship may be the same or may be different.

For example, the first connection relationship may be used to implement a real-number-based communication algorithm, a real-number-stream-based AI algorithm (for example, a real-number-based communication AI algorithm, or a real-number-based non-communication AI algorithm), and the like. The second connection relationship may be used to implement a complex-number-based communication algorithm, a complex-number-stream-based AI algorithm (for example, a complex-number-based communication AI algorithm, or a complex-number-based non-communication AI algorithm), and the like.

In an example description, the adder and the multiplier in the PE are fully connected. In other words, there is a connection relationship between any two devices (the adder and/or the multiplier) in the PE, so that the PE can support the adder and the multiplier to be connected in a plurality of connection manners.

The control unit may control a connection relationship used by the PE in the computing unit.

In a possible implementation, the control unit may control, based on an operation task, a connection relationship used by the PE in the computing unit.

Optionally, if input data of the operation task is a real-number stream, a control device may determine that the operation task is a real-number-stream-based operation. If the input data of the operation task is a complex-number stream, the control device may determine that the operation task is a complex-number-stream-based operation.

Specifically, the control unit may control, based on the input data of the operation task, a connection relationship used by the PE in the computing unit. For example, if the input data is a real-number stream, the PE in the computing unit may be controlled to use the first connection relationship. If the input data is a complex-number stream, the PE in the computing unit may be controlled to use the second connection relationship.

In a possible implementation, the control unit may determine the operation task in the following manner: The control unit may determine a specific operation task when detecting a preset event that triggers the operation task.

For example, when detecting a preset event that triggers image recognition, the control unit determines that the operation task is to perform image recognition. For example, the preset event may be a facial recognition instruction triggered by a user, an object recognition instruction triggered by the user, or the like.

For another example, when detecting a preset event that triggers voice processing, the control unit determines that the operation task is to perform voice processing. For example, the preset event may be a calling instruction triggered by the user, a recording instruction triggered by the user, or the like.

For another example, when detecting a preset event that triggers channel estimation, the control unit determines that the operation task is to perform channel estimation. For example, the preset event may be as follows: A device in which the processing apparatus is located receives an uplink DMRS channel, an uplink SRS channel, or a downlink CSI-RS channel, or the like.

For another example, when detecting a preset event that triggers channel time domain prediction, the control unit determines that the operation task is to perform channel time domain prediction. For example, the preset event may be as follows: The device in which the processing apparatus is located receives indication information sent by a peer end communication device, the device in which the processing apparatus is located determines that channel time domain prediction needs to be performed, or the like.

For another example, when detecting a preset event that triggers constellation symbol modulation, the control unit determines that the operation task is to perform constellation symbol modulation. For example, the preset event may be as follows: The device in which the processing apparatus is located determines that a regular constellation or an irregular constellation of a transmit end needs to be constructed, the device in which the processing apparatus is located needs to send a signal to a receive end, or the like.

For another example, when detecting a preset event that triggers constellation symbol demodulation, the control unit determines that the operation task is to perform constellation symbol demodulation. For example, the preset event may be as follows: The processing apparatus receives a signal sent by a peer end device, or the like.

For another example, when detecting a preset event that triggers CSI compression feedback, the control unit determines that the operation task is to perform compression feedback on CSI obtained through estimation. For example, the preset event may be as follows: The device in which the processing apparatus is located receives a pilot signal of the peer end device, the device in which the processing apparatus is located performs channel estimation, or the like.

For another example, when detecting a preset event that triggers channel reconstruction, the control unit determines that the operation task is to perform channel reconstruction. For example, the preset event may be as follows: The device in which the processing apparatus is located receives CSI reported by the peer end device, or the like. Further, if the CSI is compressed CSI, the control unit may determine that the operation task further includes CSI recovery.

For another example, when detecting a preset event that triggers beamforming on a signal to be sent, the control unit determines that the operation task is to perform beamforming on the signal to be sent. For example, the preset event may be as follows: The device in which the processing apparatus is located needs to send a signal to the peer end device, or the like.

For another example, when detecting a preset event that triggers signal detection, the control unit determines that the operation task is to perform signal detection. For example, the preset event may be as follows: The device in which the processing apparatus is located receives a signal sent by the peer end device, or the like.

For another example, when detecting a preset event that triggers link quality prediction, the control unit determines that the operation task is to perform link quality prediction. For example, the preset event may be as follows: The device in which the processing apparatus is located receives measurement quantities such as a CQI and RSRP that are fed back by a terminal device, or the like.

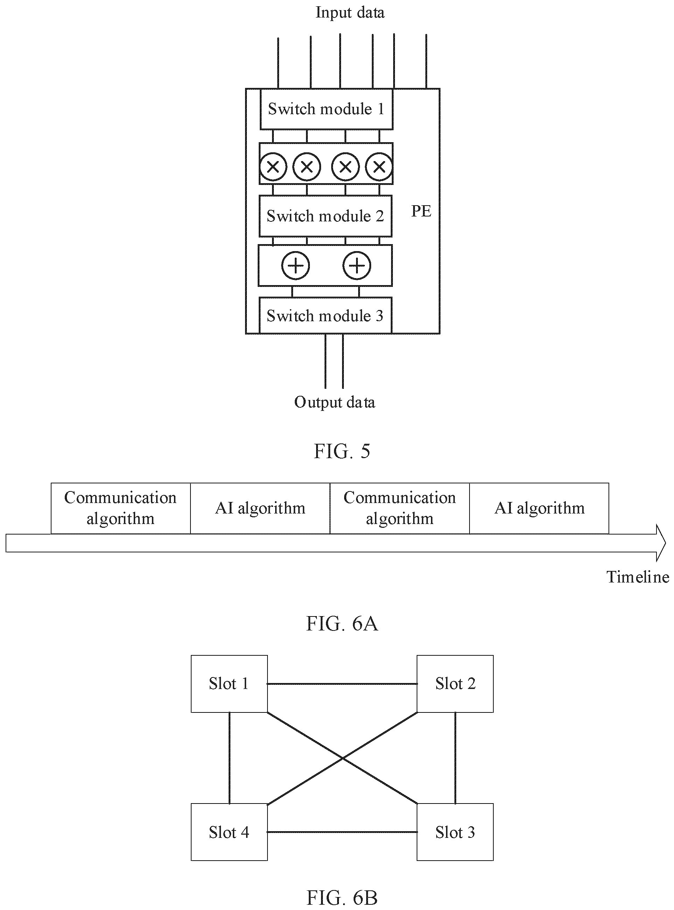

As shown in FIG. 5, one PE is used as an example. The PE includes three switch (switch) modules, a multiplier module, and an adder module. Each switch module includes at least one switch, the multiplier module includes four multipliers, and the adder module includes two adders. A switch module 1 controls, by using an on/off state of a switch, a multiplier in which a data stream is input, and a switch module 2 controls, by using an on/off state of a switch, an adder in which a data stream is input. A switch module 3 controls output of a data stream by using an on/off state of a switch.

Specifically, if the PE performs a real-number-stream-based operation, the first connection relationship may be used. For example, the switch module 1 may control, by using an on/off state of a switch, a data stream to be input to a multiplier part (for example, the four multipliers) in the multiplier module, and the switch module 2 may control, by using an on/off state of a switch, a data stream processed by the multiplier module to be directly output to an output end of the PE (for example, the adders are skipped). If the PE performs a complex-number-stream-based operation, the second connection relationship may be used. For example, the switch module 1 may control, by using an on/off state of a switch, a data stream to be input to a multiplier part (for example, the four multipliers) in the multiplier module, and the switch module 2 may control, by using an on/off state of a switch, a data stream processed by the multiplier module to be input to an adder part (for example, the two adders) in the adder module and then to be output from the adders.

It should be understood that FIG. 5 is merely an example for description. In this application, quantities of switch modules, multiplier modules, and adder modules and a connection relationship are not limited, and a quantity of multipliers in the multiplier module and a quantity of adders in the adder module are not limited either.

The foregoing manner is different from a manner in which a real-number-stream-based algorithm and a complex-number-stream-based algorithm need to be respectively implemented by using two types of processing apparatuses in that a few hardware interconnections are added, so that a multiplier and an adder can be reused in one processing apparatus to implement different algorithms. According to the method, the processing apparatus supports flexible hardware processing and configuration, so that resource utilization is improved. In addition, because the processing apparatus provided in this application can implement both a real-number-stream-based algorithm and a complex-number-stream-based algorithm, efficient computation of a communication algorithm and an AI algorithm can be implemented by using one processing apparatus.

Based on an architecture of the foregoing PE, when controlling the computing unit to perform an operation, the control unit may control a connection relationship used by the PE in the computing unit. For example, the control unit may schedule, based on an operation task to be performed, a connection relationship used by the PE in the computing unit. For example, when a real-number operation is performed, the PE in the computing unit may be scheduled to use the first connection relationship, and when a complex-number operation is performed, the PE in the computing unit may be scheduled to use the second connection relationship.

Optionally, the control unit may schedule the computing unit in a time division multiplexing manner to implement a communication algorithm and an AI algorithm, for example, as shown in FIG. 6A. In this manner, utilization and energy efficiency of hardware of the processing apparatus can be improved.

In a possible implementation, the computing unit may include one or more slots, and each slot includes one or more PEs. If the computing unit includes a plurality of slots, the plurality of slots are connected to each other. In other words, there is a connection relationship between any two of the plurality of slots. For example, as shown in FIG. 6B, the computing unit includes a slot 1, a slot 2, a slot 3, and a slot 4, and any one of the four slots has connection relationships with the other slots. Any two of the plurality of slots implement a same function or different functions, and each slot completes one function processing step in operator computation independently. Functions of PEs in the foregoing slots may be the same or may be different. This is not specifically limited herein.

For example, the computing unit includes a first slot, a second slot, and a third slot, and the first slot, the second slot, and the third slot are connected to each other. The first slot includes a plurality of PEs implementing a multiplication function, the second slot includes a plurality of PEs implementing an adder tree function, and the third slot includes a plurality of PEs implementing an accumulator function. It should be understood that, an example in which the PEs included in the slots have a same function is used herein merely for description, and a function type of the PEs in the slots is not limited.

For example, if a slot is configured to implement a real-number-stream-based operation, all PEs in the slot are used to implement the real-number-stream-based operation. For example, all PEs in the slot use the first connection relationship. If a slot is configured to implement a complex-number-stream-based operation, all PEs in the slot are used to implement the complex-number-stream-based operation. For example, all PEs in the slot use the second connection relationship.

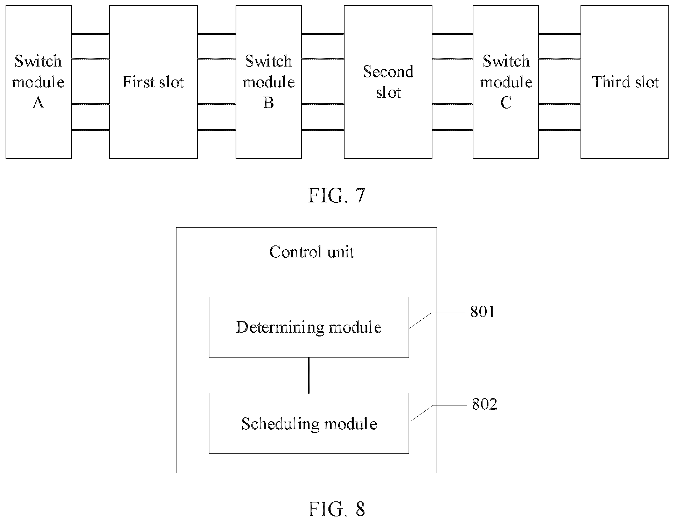

As shown in FIG. 7, the computing unit includes three switch modules, the first slot, the second slot, and the third slot. Each switch module includes at least one switch. A switch module A controls, by using an on/off state of a switch, a data stream to be input to the first slot, and a switch module B controls, by using an on/off state of a switch, a data stream to be input to the second slot. A switch module C controls, by using an on/off state of a switch, a data stream to be input to the third slot.

It should be understood that FIG. 7 is merely an example for description, and quantities and functions of switch modules and slots are not limited in this application.

It should be noted that a position of a switch module in the processing apparatus is not limited in this application, and the switch module may be included in a slot. Alternatively, the switch module may be deployed outside the slot. This is not specifically limited herein.

Based on a structure of the computing unit, when controlling the computing unit to perform an operation, the control unit may schedule all or some of the plurality of slots to perform the operation. For example, when a first operation task is performed, all of the plurality of slots may be scheduled to perform an operation; when a second operation task is performed, a first part of the plurality of slots may be scheduled to perform an operation; and when a third operation task is performed, a second part of the plurality of slots may be scheduled to perform an operation.

With reference to the example in FIG. 7, the following describes a process in which the control unit schedules some slots by using an example. The control unit may schedule the first slot and the third slot based on an operation task to be performed. Specifically, the control unit may control the switch module A to be turned on, the switch module B to be turned off, and the switch module C to be turned on. In this way, a data stream is input to the first slot under control of the switch module A. After being processed in the first slot, the data stream is input to the third slot under control of the switch module C. After the data stream is processed in the third slot, data is output. That a switch module is turned on means that at least one switch in the switch module is in a turned-on state, and that a switch module is turned off means that all switches in the switch module are in a turned-off state.

In a possible implementation, when scheduling a specific slot to perform an operation, the control unit may specifically schedule, based on an operation task, a computing element in the slot to perform a corresponding operation. For example, FIG. 7 is used as an example. The control unit may schedule, based on the operation task to be performed, a PE in the first slot to perform an operation. The control unit may further schedule, based on the operation task to be performed, a PE in the second slot to perform an operation. The control unit may further schedule, based on the operation task to be performed, a PE in the third slot to perform an operation, and the like.

It should be understood that the scheduled computing element in the slot may be related to an operation amount. For example, if an operation amount of the operation task is large, the control unit may schedule a large quantity of computing elements in the slot to perform an operation. If an operation amount of the operation task is small, the control unit may schedule a small quantity of computing elements in the slot to perform an operation.

In the foregoing manner, the slots are interconnected, so that computation resources, such as the multiplier, the adder tree, and the accumulator, in different slots are reusable in different instruction configurations (operators). In this way, computation resource utilization can be improved.

A specific connection medium between the control unit, the computing unit, and the storage unit is not limited in this embodiment of this application. In embodiments of this application, the control unit, the computing unit, and the storage unit are connected by using a bus in FIG. 1 and FIG. 3, and the bus is represented by using a bold line in FIG. 1 and FIG. 3. A connection manner between other components is merely an example for description, and is not limited thereto. The bus may be classified into an address bus, a data bus, a control bus, and the like. For ease of representation, the bus is represented by using only one bold line in FIG. 1 and FIG. 3, but this does not mean that there is only one bus or only one type of bus.

According to this embodiment of this application, the processing apparatus may support a plurality of types of operators, for example, a conventional complex-number operator (such as, a complex-number operator in a communication algorithm), a conventional real-number operator (such as, a real-number operator in a communication algorithm), an AI complex-number operator (such as, a complex-number operator in a communication AI algorithm), an AI real-number operator (such as, a real-number operator in a non-communication AI algorithm or a real-number operator in a communication AI algorithm), and the like, and may implement efficient support for a communication algorithm and an AI algorithm by using a single piece of hardware, and the two types of algorithms may share a hardware resource in a time division multiplexing manner, to improve utilization and energy efficiency of hardware of the processing apparatus. In addition, in this embodiment of this application, when a data stream is processed, control information required for performance is determined once for a plurality of pieces of data that form the data stream. Compared with a case in which control information for performance is determined once for each piece of data, this application can improve computing efficiency.

Based on a same concept as the method embodiment, an embodiment of this application provides a control unit. A structure of the control unit may be shown in FIG. 8, and the control unit includes a determining module 801 and a scheduling module 802. The control unit may be specifically configured to implement the methods performed by the control unit in embodiments in FIG. 3 to FIG. 5, FIG. 6A, FIG. 6B, and FIG. 7. The determining module 801 is configured to determine an operation task. The scheduling module 802 is configured to, when the operation task is a real-number-based operation, schedule a first connection relationship between at least one adder and at least one multiplier of a computing element in a computing unit to perform an operation; or when the operation task is a complex-number-based operation, schedule a second connection relationship between the at least one adder and the at least one multiplier of the computing element to perform an operation. The first connection relationship is used to implement a real-number-stream-based communication algorithm or artificial intelligence AI algorithm, and the second connection relationship is used to implement a complex-number-stream-based communication algorithm or AI algorithm.

Optionally, the scheduling module 802 is further configured to schedule at least one slot in the computing unit based on the operation task, and the at least one slot is configured to perform an operation on the operation task.

Optionally, the scheduling module 802 is further configured to schedule a computing element in a first slot based on the operation task when scheduling the first slot in the computing unit, and the scheduled computing element is configured to perform the operation on the operation task.

Division into the modules in embodiments of this application is an example, is merely division into logical functions, and may be other division during actual implementation. In addition, functional modules in embodiments of this application may be integrated into one processing apparatus, or each of the modules may exist alone physically, or two or more modules may be integrated into one module. The integrated module may be implemented in a form of hardware, or may be implemented in a form of a software functional module. It may be understood that, for functions or implementations of the modules in this embodiment of this application, further refer to related descriptions of embodiments in FIG. 3 to FIG. 5, FIG. 6A, FIG. 6B, and FIG. 7.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A processing apparatus, wherein the processing apparatus supports an operation of a communication algorithm and an operation of an artificial intelligence AI algorithm;
the processing apparatus comprises a computing unit and a control unit;
the computing unit comprises a computing element, the computing element supports a first connection relationship between at least one adder and at least one multiplier, and a second connection relationship between the at least one adder and the at least one multiplier;
the first connection relationship is used to implement a real-number-stream-based communication algorithm or AI algorithm, and the second connection relationship is used to implement a complex-number-stream-based communication algorithm or AI algorithm; and
the control unit is configured to control a connection relationship used by the computing element in the computing unit, and the connection relationship comprises the first connection relationship and the second connection relationship.

2. The processing apparatus according to claim 1, wherein the at least one adder and the at least one multiplier are fully connected.

3. The processing apparatus according to claim 1, wherein the control unit is specifically configured to:
schedule the computing unit in a time division multiplexing manner to implement the communication algorithm and the AI algorithm.

4. The processing apparatus according to claim 1, wherein the computing unit comprises one slot, and the slot comprises one or more computing elements.

5. The processing apparatus according to claim 1, wherein the computing unit comprises at least two slots, the at least two slots are connected to each other, and each of the slots comprises one or more computing elements.

6. The processing apparatus according to claim 4 or 5, wherein the slot performs a corresponding operation by using a scheduled computing element in the slot when implementing a function corresponding to the slot.

7. The processing apparatus according to claim 5, wherein the control unit is further configured to schedule all or some of the at least two slots to perform an operation.

8. The processing apparatus according to any one of claims 1 to 7, wherein the AI algorithm comprises a communication AI algorithm and/or a non-communication AI algorithm.

9. A control method, wherein the method comprises:
determining, by a control unit, an operation task; and
if the operation task is a real-number-stream-based operation, scheduling, by the control unit, a first connection relationship between at least one adder and at least one multiplier of a computing element in a computing unit to perform an operation; or
if the operation task is a complex-number-stream-based operation, scheduling, by the control unit, a second connection relationship between the at least one adder and the at least one multiplier of a computing element to perform an operation; and
the first connection relationship is used to implement a real-number-stream-based communication algorithm or artificial intelligence AI algorithm, and the second connection relationship is used to implement a complex-number-stream-based communication algorithm or AI algorithm.

10. The method according to claim 9, wherein the method further comprises:
scheduling, by the control unit, at least one slot in the computing unit based on the operation task, and the at least one slot is configured to perform an operation on the operation task.

11. The method according to claim 10, wherein the method further comprises:
scheduling, by the control unit, a computing element in a first slot based on the operation task when scheduling the first slot in the computing unit, and the scheduled computing element is configured to perform the operation on the operation task.

12. A control unit, wherein the control unit comprises:
a determining module, configured to determine an operation task; and
a scheduling module, configured to, when the operation task is a real-number-stream-based operation, schedule a first connection relationship between at least one adder and at least one multiplier of a computing element in a computing unit to perform an operation, or
when the operation task is a complex-number-stream-based operation, schedule a second connection relationship between the at least one adder and the at least one multiplier of a computing element to perform an operation; and
the first connection relationship is used to implement a real-number-stream-based communication algorithm or artificial intelligence AI algorithm, and the second connection relationship is used to implement a complex-number-stream-based communication algorithm or AI algorithm.

13. The control unit according to claim 12, wherein the scheduling module is further configured to schedule at least one slot in the computing unit based on the operation task, and the at least one slot is configured to perform an operation on the operation task.

14. The control unit according to claim 13, wherein the scheduling module is further configured to:
schedule a computing element in a first slot based on the operation task when scheduling the first slot in the computing unit, and the scheduled computing element is configured to perform the operation on the operation task.

15. A computer-readable storage medium, wherein the computer-readable storage medium is configured to store computer instructions, and when the computer instructions are run on a computer, the computer is enabled to perform the method according to any one of claims 9 to 11.

16. A computer program product, wherein the computer program product comprises instructions, and when the instructions are run by a processing apparatus, the method according to any one of claims 9 to 11 is implemented.

17. A chip system, comprising a processor, wherein the processor is configured to execute a program, instructions, or code stored in a memory, to implement the method according to any one of claims 9 to 11.
